(19) Europäisches Patentamt
European Patent Office
Office européen des brevets

(11) Veröffentlichungsnummer: **0 301 307 B1**

(12) **EUROPÄISCHE PATENTSCHRIFT**

(45) Veröffentlichungstag der Patentschrift: **15.04.92**

(51) Int. Cl.⁵: **C08G 18/67**

(21) Anmeldenummer: **88111110.8**

(22) Anmeldetag: **12.07.88**

# (54) Verfahren zur Herstellung von Polyurethanschäumen.

(30) Priorität: **25.07.87 DE 3724717**

(43) Veröffentlichungstag der Anmeldung:
**01.02.89 Patentblatt 89/05**

(45) Bekanntmachung des Hinweises auf die Patenterteilung:
**15.04.92 Patentblatt 92/16**

(84) Benannte Vertragsstaaten:
**BE DE FR GB IT NL**

(56) Entgegenhaltungen:
**EP-A- 0 124 111**
**FR-A- 2 152 632**
**US-A- 3 484 392**

(73) Patentinhaber: **Th. Goldschmidt AG**
**Goldschmidtstrasse 100 Postfach 101461**
**W-4300 Essen 1(DE)**

(72) Erfinder: **Burkhart, Georg, Dr.**
**Barkhovenallee 22**
**W-4300 Essen 16(DE)**
Erfinder: **Fock, Jürgen, Dr.**
**Mörsenbroicher Weg 114**
**W-4000 Düsseldorf 30(DE)**
Erfinder: **Möhring, Volker, Dr.**
**Muhrenkamp 74**
**W-4330 Mülheim/Ruhr(DE)**

**EP 0 301 307 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Polyurethan- und/oder Polyisocyanurat-Hartschäumen aus mindestens difunktionellen Polyisocyanaten, Verbindungen mit mindestens zwei gegenüber Isocyanaten reaktionsfähigen Wasserstoffatomen, deren Äquivalentgewicht je reaktionsfähigem Wasserstoffatom etwa 50 bis 900 beträgt, Katalysatoren, Treibmitteln und Schaumstabilisatoren, welche frei von Siliciumatomen sind, sowie gegebenenfalls üblichen Zusatzmitteln, wie Flammschutzmittel und Kettenverlängerer.

Polyurethanhartschäume werden in großer Menge nach an sich bekannten Verfahren und aus bekannten Rohstoffen hergestellt. Eine zusammenfassende Darstellung der verwendeten Rohstoffe und der anwendbaren Verfahren ist in Ullmann "Enzyklopädie der technischen Chemie", 1980, Band 19, Seiten 301 bis 341, und im Kunststoff-Handbuch, Band VII, "Polyurethane" von R. Vieweg und A. Höchtlen, Carl Hanser Verlag, München, 1966, Seiten 504 bis 544, sowie in "Polyurethane" Kunststoff-Handbuch 7 von G. Oertel, Carl Hanser Verlag, München, 1983, Seiten 246 bis 331, zu finden.

Polyurethanhartschäume werden vorzugsweise zur thermischen Isolierung verwendet. Dabei können sie zu Formteilen, wie beispielsweise Platten, verschäumt werden. Es ist auch möglich, Hohlräume aller Art auszuschäumen, wobei der in dem Hohlraum befindliche Schaum häufig als konstruktives Element auch tragende Eigenschaften haben muß. Es ist weiter möglich, Polyurethanhartschäume auf flächige Träger aufzuspritzen.

Die Qualität und die Eigenschaften des gebildeten Hartschaumes hängen in besonderem Maße von der Struktur und der chemischen Zusammensetzung des verwendeten Schaumstabilisators ab.

Als Schaumstabilisatoren werden im allgemeinen Polysiloxan-Polyoxyalkylen-Blockmischpolymerisate verwendet. Diese Stabilisatoren haben hohe Wirksamkeit und lassen sich durch geeignete Auswahl der Struktur und der Zusammensetzung dem Verschäumungssystem und dem Verschäumungsverfahren anpassen. Ein Nachteil dieser siliciumorganischen Stabilisatoren ist jedoch ihr hoher Preis. Es wurde auch beobachtet, daß die Oberflächen der erhaltenen Schaumstoffe bei Verwendung siliciumorganischer Stabilisatoren schlecht benetzbar sind, wodurch nachfolgende Oberflächenschutzbehandlungen, wie etwa eine Lackierung, erschwert werden. Man hat deshalb bereits versucht, siliciumfreie Stabilisatoren zu entwicklen, die diese Nachteile nicht aufweisen.

In der DE-PS 22 44 350 ist ein Verfahren zur Herstellung eines Polyurethanschaums durch Umsetzung eines wenigstens 2 NCO-Gruppen aufweisenden Polyisocyanats mit einem Polyetherpolyol in Gegenwart eines Katalysators, eines Blähmittels und 0,5 bis 3 Gewichtsteilen, bezogen auf 100 Gewichtsteile, Polyetherpolyol, eines in einem Alkohol radikalisch polymerisierten, N-Vinylpyrrolidon eingebaut enthaltenden Polymeren als Zellstabilisator beschrieben, welches dadurch gekennzeichnet ist, daß man als Zellstabilisator das gesamte flüssige Produkt verwendet, das erhalten worden ist, indem man in einem flüssigen Polyetherpolyol mit 2 bis 8 Hydroxylgruppen und einem Molekulargewicht von 150 bis 6500 durch eine mit einem freien Radikal initiierte Polymerisation, gegebenenfalls in Gegnenwart eines Kettenübertragungsmittels, die folgenden Monomeren zu wenigstens 30 % polymerisiert

a) 5 bis 60 Gewichtsprozent N-Vinylpyrrolidon,

b) 12,7 bis 26,5 Gewichtsprozent N-Vinylpyrrolidon und 14,5 bis 38,4 Gewichtsprozent Dibutylmaleat oder

c) 10 bis 19 Gewichtsprozent N-Vinylpyrrolidon, 20 bis 25 Gewichtsprozent Dibutylmaleat und 8 bis 16 Gewichtsprozent Vinylacetat.

In der Patentschrift wird vermutet, daß das polymerisierte Produkt der zellstabilisierende Bestandteil ist. Wird das Polymerisat jedoch vom Polyol abgetrennt, ist es weniger wirksam und erhält auch nach erneutem Auflösen in dem Polyol seine Wirksamkeit nicht zurück.

In der US-PS 3 914 188 sind ähnliche Stabilisatoren beschrieben. Das als Stabilisator wirksame Copolymerisat wird in einem Polyether mit verkappten Endgruppen durch Copolymerisation von Verbindungen der Formel

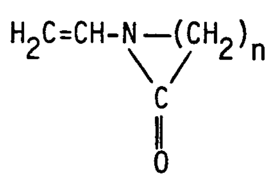

wobei n = 3, 4 oder 5 ist, und dem Ester einer ungesättigten Dicarbonsäure mit 4 oder 5 Kohlenstoffatomen hergestellt. Diese stabilisierenden Zubereitungen haben den Vorteil, daß sie gegenüber Isocyanaten weitgehend inert sind und deshalb lagerfähige Gemische dieser Stabilisatoren mit Isocyanaten hergestellt werden können.

In dem Aufsatz "Organic Surfactants for Rigid Urethane and Isocyanurate Foam" von M.J. Skowronski und M.E. Londrigan in Journal of Cellular Plastics 22, 1986, 235 ff., werden Stabilisatoren für Phenolharz-, Isocyanurat- und Urethanschäume auf organischer Basis beschrieben. Dabei erwiesen sich insbesondere Polymerisate von Fumarsäurediestern, insbesondere Fumarsäureditridecylester als brauchbar, deren Polymerisation in Ricinusöl, an welches 36 Mol Ethylenoxid angelagert waren, durchgeführt worden war und wobei das Polymerisat in dem ethoxylierten Ricinusöl belassen wurde.

Diese aus dem Stand der Tehchnik bekannten siliciumfreien Stabilisatoren ermöglichen die Herstellung von Polyurethan-Hartschaumstoffen, deren Oberflächen besser benetzbar und überlackier- und verklebbar sind. Gleichzeitig ist das Brennverhalten der Polyurethan-Hartschaumstoffe verbessert. Sie können jedoch noch nicht alle an sie gesetzten Bedingungen erfüllen. Ein wichtiger Nachteil der siliciumfreien Stabilisatoren gegenüber den siliciumorganischen Stabilisatoren liegt in der verminderten Löslichkeit des Treibmittels auf Halogenkohlenwasserstoffbasis im Schaumsystem. Diese verminderte Löslichkeit wird insbesondere bei Verwendung von Polyesterolen beobachtet. Dies ist die Ursache für die in diesen Fällen gefundene Verschlechterung der thermischen Isolierwirkung der Schaumstoffe.

Der vorliegenden Erfindung liegt deshalb die Aufgabe zugrunde, siliciumfreie Schaumstabilisatoren zu finden, welche die Herstellung von Polyurethanschaumstoffen ermöglichen, die neben verbessertem Brennverhalten und günstigen Oberflächeneigenschaften hervorragende thermische Isolierwirkung aufweisen. Derartige Schaumstabilisatoren sollen deshalb die Löslichkeit von Halogenkohlenstofftreibgasen in dem Verschäumungsansatz erhöhen. Dabei sollen die Schaumstabilisatoren gegenüber Isocyanatgruppen dann inert sein, wenn lagerfähige Vormischungen mit den Ausgangsverbindungen der Verschäumungsreaktion erwünscht sind.

Die Lösung dieser und weiterer Aufgaben gelingt nach der vorliegenden Erfindung dadurch, daß man als Schaumstabilisatoren Copolymerisate verwendet, welche durch Copolymerisation von

a) Vinylmonomeren der allgemeinen Formel

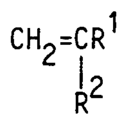

wobei

$R^1$ ein Wasserstoff- oder Methylrest,

$R^2$ der Rest

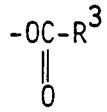 , 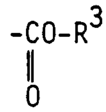 oder 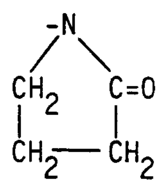

$R^3$ ein Alkylrest mit 1 bis 4 Kohlenstoffatomen ist,

und bei Vorliegen eines Monomerengemisches $R^1$, $R^2$ und $R^3$ unterschiedliche Bedeutung haben können, und

b) Allyl- oder Methallylpolyoxyalkylenethern der allgemeinen Formel

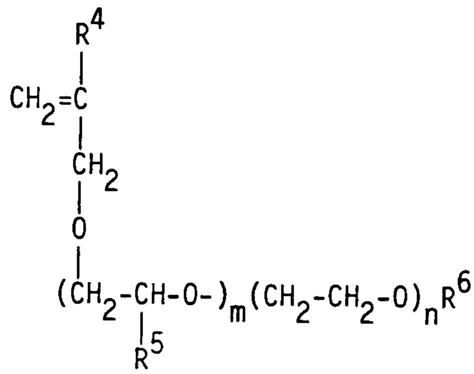

wobei

- $R^4$ ein Wasserstoff- und/oder Methylrest,
- $R^5$ ein Methyl- und/oder Ethylrest,
- $R^6$ ein Wasserstoffrest oder eine gegenüber Isocyanatgruppen inerte Endgruppe,
- m eine Zahl von 1 bis 120,
- n eine Zahl von 1 bis 90 ist, und
- m : n einen Wert von 0,1 bis 7 hat,

und welche ein durchschnittliches Molgewicht von 400 bis 5000 aufweisen,

im Molverhältnis a : b gleich 1 bis 10 in an sich bekannter Weise erhältlich sind.

Geeignete Vinylmonomere, bei denen der Rest $R^2$ die Bedeutung des Restes

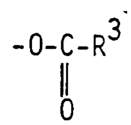

hat, sind Vinylacetat, Vinylpropionat und Vinylbutyrat. Hat der Rest $R^2$ die Bedeutung eines Restes

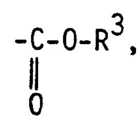

liegen die entsprechenden Ester der Acrylsäure oder Methacrylsäure mit aliphatischen Alkoholen mit 1 bis 4 Kohlenstoffatomen vor. Als Vinylmonomeres kann ferner Vinylpyrrolidon eingesetzt werden.

Zur Herstellung der beim erfindungsgemäßen Verfahren eingesetzten Copolymerisate können auch Gemische der Vinylmonomeren verwendet werden.

Die als Monomerenkomponente b) ausgewählten Allyl- oder Methallylpolyoxyalkylenethersind bekannte Verbindungen und können in an sich bekannter Weise hergestellt werden. In der allgemeinen Formel

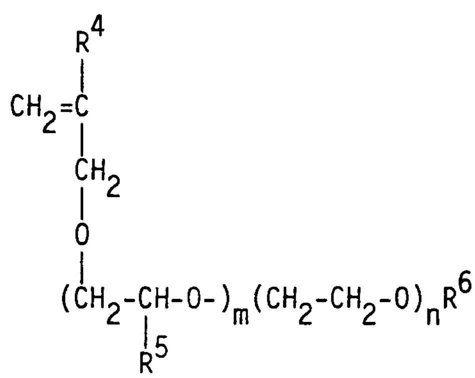

ist somit $R^4$ ein Wasserstoff- oder Methylrest. Die Oxyalkylenkette weist n Oxyethylen-Einheiten auf. n ist dabei eine Zahl von 1 bis 90. Mit m wird die Anzahl der Oxypropylen- bzw. Oxybutyleneinheiten bezeichnet, abhängig von der Bedeutung des Restes $R^5$ als Methyl- oder Ethylrest. Der Quotient m : n hat einen Wert von 0,1 bis 7, vorzugsweise von 0,6 bis 2.

$R^6$ ist ein Wasserstoffrest, vorzugsweise jedoch eine Endgruppe, die gegenüber Isocyanatgruppen inert ist. Besonders bevorzugt ist als Endgruppe $R^6$ eine Kohlenwasserstoffgruppe mit 1 bis 8 Kohlenstoffatomen, die Gruppe

$$-\underset{\underset{O}{\|}}{C}-NH-R^7 \text{ oder } -\underset{\underset{O}{\|}}{C}-R^7,$$

wobei $R^7$ eine Kohlenwasserstoffgruppe mit 1 bis 8 Kohlenstoffatomen ist. Solche inerten Endgruppen können durch Umsetzung freier OH-Gruppen des Polyoxyalkylenanteils nach bekannten Verfahren mit geeigneten Schutzmitteln vor oder nach der Copolymerisation erhalten werden. So können z.B. als Schutzmittel Alkylhalogenide, wie Methyl-, Ethyl-, Propyl-, Butyl-, Allyl- oder Benzylhalogenid, olefinische Verbindungen, wie Isobuten oder Alkylvinylether, organische Isocyanate, wie Methyl-, Ethyl-, Butyl- oder Phenylisocyanat oder Carbonsäuren oder deren Derivate, wie Essigsäure, Acetanhydrid, Acetylchlorid, Essigsäurealkylester, Benzoesäure oder Benzoylchlorid, verwendet werden.

Durch die geeignete Auswahl der Gruppe $R^6$ ist es möglich, Copolymerisate zu erhalten, welche im Polyisocyanat lagerfähig sind. Ist es jedoch erwünscht, die Stabilisatoren dem Verschäumungspolyol zuzumischen, sind diejenigen Polymerisate bevorzugt, bei denen mindestens die Hälfte der Reste $R^6$ Wasserstoffreste sind. Mit steigendem Gehalt an Hydroxylgruppen nimmt die Löslichkeit der Verbindungen in den Verschäumungspolyolen zu, wodurch ihre Mischbarkeit und Dosierbarkeit verbessert wird.

Das mittlere Molekulargewicht der Allyl- oder Methallylpolyoxyalkylenether ist 400 bis 5000. Vorzugsweise haben die Polyether ein mittleres Molekulargewicht von 1400 bis 2400.

Die unterschiedlichen Oxyalkyleneinheiten können statistisch oder blockartig gebunden sein. Die blockartige Anordnung ist jedoch bevorzugt. Bei blockartiger Anordnung befindet sich der Polyoxyethylenblock vorzugsweise der Gruppe $R^6$ benachbart am Kettende.

Das Molverhältnis der Monomerenkomponenten a) : b) soll 1 bis 10, vorzugsweise 3 bis 5 betragen.

Die beim erfindungsgemäßen Verfahren zu verwendenden Stabilisatoren werden in üblichen Mengen, d.h. in Mengen von etwa 0,2 bis 5 Gew.-%, bezogen auf Polyol, verwendet.

Es ist selbstverständlich möglich, zusätzlich zu den beim erfindungsgemäßen Verfahren zu verwendenden Stabilisatoren weitere Stabilisatoren mit gegebenenfalls anderer Struktur oder zusätzlich andere Zusatzmittel einzusetzen.

Als Polyisocyanate und als Verbindungen mit gegenüber Isocyanaten reaktionsfähigen Wasserstoffatomen können die üblichen, hierfür aus dem Stand der Technik bekannten Verbindungen eingesetzt werden. Geeignete Polyisocyanate umfassen die bekannten aliphatischen, cycloalipha tischen, araliphatischen sowie aromatischen Di- oder Polyisocyanate. Die bevorzugten Polyisocyanate sind 2,4- und 2,6-Toluoldiisocyanat, Diphenylmethandiisocyanat, Polymethylenpolyphenylisocyanat und Mischungen davon. Auch beliebige der anderen in üblicher Weise verwendeten Polyisocyanate, wie Hexamethylendiisocyanat, Chlorphenyldiisocyanat, Bromphenyldiisocyanat, Tetraisocyanatodiphenylmethan oder dergleichen, können verwendet werden.

Unter Verbindungen mit mindestens zwei gegenüber Isocyanatgruppen reaktionsfähigen Wasserstoffatomen versteht man Hydroxylgruppen und/oder Aminogruppen und/oder Thiolgruppen und/oder Carboxylgruppen aufweisende Verbindungen, vorzugsweise aber Hydroxyl- und/oder Aminogruppen aufweisende Verbindungen. Diese Verbindungen haben in der Regel 2 bis 8, vorzugsweise 2 bis 4, gegenüber Isocyanaten reaktionsfähige Wasserstoffatome. Beispiele solcher Verbindungen sind dem Verschäumungsfachmann geläufig und können z.B. der DE-OS 28 32 253 entnommen werden.

Man erhält nach dem erfindungsgemäßen Verfahren Polyurethan- und/oder Polyisocyanurat-Hartschäume, welche die gewünschte Eigenschaftskombination aufweisen: verringerte Brennbarkeit, verbesserte Lackierbarkeit und Verklebbarkeit der Schaumoberfläche, hohe thermische Isolierwirkung und günstiges Preiswirkungsverhältnis der Schaumstabilisatoren.

In den folgenden Beispielen werden die (nicht erfindungsgemäße) Herstellung der Stabilisatoren, ihre Verwendung bei der Herstellung von Polyurethanschäumen und die anwendungstechnischen Eigenschaften der erhaltenen Schaumstoffe noch näher erläutert.

Beispiel 1

Herstellung eines Schaumstabilisators (nicht beansprucht)

1800 g eines Allylpolyoxyalkylenethers

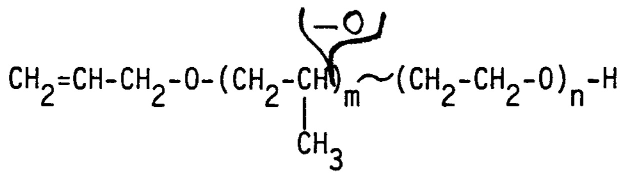

mit 50 Gew.-% Polypropylenoxidanteil und 50 Gew.-% Polyethylenoxidanteil und einem mittleren Molekulargewicht von 1800 werden in einem 3-Halskolben unter einem Stickstoffstrom auf 80 ° C erhitzt. Nach Zugabe von 12 g Azodiisobuttersäurenitril werden innerhalb von 2 h 258 g (3 Mol) Vinylacetat zudosiert. Über einen Zeitraum von 5 h, gerechnet ab der ersten Zugabe, werden noch viermal je 12 g Azodiisobuttersäurenitril zugegeben, wobei die Temperatur auf 80 ° C belassen wird. Schließlich erfolgt bei dieser Temperatur eine Nachreaktion für weitere 2 h.

Das nicht umgesetzte Vinylacetat wird im Vakuum abdestilliert. Man erhält ein hellgelbes, viskoses Copolymer mit einem gelchromatographisch bestimmten häufigsten Molekulargewicht von ca. 8000.

Die in den folgenden Beispielen aufgeführten Schaumstabilisatoren werden nach dem gleichen Verfahren wie soeben beschrieben hergestellt und unterscheiden sich wie folgt:

Schaumstabilisator

A: Produkt wie oben beschrieben.

B: Es werden 431 g (5 Mol) Vinylacetat zudosiert.

C: Es wird ein Gemisch von 172 g (2 Mol) Vinylacetat und 128 g (1 Mol) Butylacrylat zudosiert.

D: Es werden 334 g (3 Mol) N-Vinylpyrrolidon und kein Vinylacetat zudosiert.

E: Es wird ein Allylpolyoxyalkylenether mit einem häufigsten Molekulargewicht von 2400 und mit 50 Gew.-% Polypropylenoxidanteil und 50 Gew.-% Polyethylenoxidanteil eingesetzt.

F: Es wird ein Allylpolyoxyalkylenether mit einem häufigsten Molekulargewicht von 1800 und mit 35 Gew.-% Polybutylenoxidanteil und 65 Gew.-% Polyethylenoxidanteil eingesetzt.

G: Das Produkt nach Beispiel 1 wird anschließend mit einer zu den OH-Gruppen äquimolaren Menge Butylisocyanat umgesetzt.

H: Das Produkt nach Beispiel 1 wird anschließend mit einer zu den OH-Gruppen äquimolaren Menge Acetanhydrid umgesetzt.

Zum Vergleich dienen zwei siliciumfreie Schaumstabilisatoren.

Vergleichsprodukt 1:

Ein Polymerprodukt, enthaltend ein Copolymer aus N-Vinylpyrrolidon und Dibutylmaleat, polymerisiert in einem trifunktionellen Polyol, beschrieben im US-Patent 3 746 663.

Vergleichsprodukt 2:

Ein Polymerisat aus Fumarsäureditridecylester, polymerisiert in ethoxyliertem Ricinusöl, beschrieben im US-Patent 4 529 745.

Beispiele 2 bis 11

Herstellung von PU-Schäumen (erfindungsgemäß)

Nach der folgenden Rezeptur, die geeignet ist für die kontinuierliche Produktion von PU-Hartschaumplatten auf Doppelbandanlagen (CLBS), werden in Handschaumverfahren PU-Hartschaumstoffe hergestellt (Angaben in Gewichtsteilen):

70 Teile Polyesterpolyol, OHZ = 350

30 Teile Amin-Polyetherpolyol, OHZ = 530

10 Teile Flammschutzmittel Tris-2-chlorpropylphosphat

0,5 Teile $H_2O$

1,0 Teile N,N-Dimethylcyclohexylamin

2,0 Teile Trimethyl-2-hydroxypropylammoniumformiat
0,75 Teile Schaumstabilisator
35,0 Teile Trichlorfluormethan
262,7 Teile rohes Diphenylmethan-diisocyanat, MDI (Index 250)

Alle Komponenten, außer dem Diisocyanat, werden 30 Sekunden mit 1000 Upm bei 23 °C gerührt, dann das Diisocyanat zugegeben und weitere 7 Sekunden bei 2500 Upm gerührt. Die Mischung wird innerhalb von 5 Sekunden in eine Holzform mit einem Hohlraum 40 x 40 x 5 cm gegossen (Überfüllungsgrad: ca. 5 %) und diese sofort verschlossen. Zur Auskleidung der Form dient Aluminiumpapier. Vor der Entnahme läßt man den Schaum ungefähr 20 Minuten in der unbeheizten Form aushärten. Das Raumgewicht der nach diesem Verfahren erhaltenen Schäume liegt bei ca. 45 $kg.m^3$ (ohne Außenhaut).

Die für die jeweiligen physikalischen Messungen benötigen Probekörper (ohne Außenhaut) werden mit einer Schaumsäge aus dem Formschaumkörper geschnitten. Die physikalischen Messungen werden bei 23 °C und 50 Prozent relative Luftfeuchtigkeit durchgeführt. Die in Tabelle 1 aufgeführten Werte werden nach folgenden Methoden erhalten:

a) Bestimmung der Brennbarkeit entsprechend der "lowest oxygen index"-Methode (LOI) nach ASTM D 2863/70. Je höher der LOI-Wert ist, desto geringer ist die Brennbarkeit des Schaumes.

b) Bestimmung der Wärmeleitzahl λ nach DIN 52612 (Anacon-Meßgerät Modell 88, Probekörpergröße: 20 x 20 x 2,5 cm).

c) Bestimmung der Geschlossenzelligkeit mit dem Luftvergleichspyknometer Modell 930 von Beckmann nach der Beckmann-Methode (Probekörperdurchmesser: 3,4 cm Höhe 4 cm).

Die anwendungstechnischen Eigenschaften der erhaltenen Schäume in Abhängigkeit vom verwendeten Stabilisator können der Tabelle 1 entnommen werden.

Tabelle 1

| Beispiel | Schaumstabilisator | Zellstruktur | LOI-Wert | λ [W/m.K] | Geschl. Zellen [%] |
|---|---|---|---|---|---|
| 2 | A | sehr fein | 23,0 | 0,0203 | 93,8 |
| 3 | B | sehr fein bis fein | 23,3 | 0,0207 | 92,6 |
| 4 | C | sehr fein bis fein | 23,2 | 0,0206 | 91,9 |
| 5 | D | sehr fein | 23,1 | 0,0202 | 93,8 |
| 6 | E | sehr fein bis fein | 23,0 | 0,0204 | 92,8 |
| 7 | F | sehr fein bis fein | 23,1 | 0,0202 | 94,1 |
| 8 | G | sehr fein bis fein | 23,2 | 0,0212 | 90,7 |
| 9 | H | sehr fein bis fein | 23,2 | 0,0202 | 93,6 |
| 10 | Vergleich 1 | sehr fein bis fein | 23,0 | 0,0212 | 90,8 |
| 11 | Vergleich 2 | sehr fein bis fein | 23,0 | 0,0211 | 91,3 |

Die nach dem erfindungsgemäßen Verfahren hergestellten Schäume zeigen eine ausgezeichnete Zellstruktur bei einem sehr hohen Anteil geschlossener Zellen, haben ein günstiges Brennverhalten und eine hervorragende thermische Isolierwirkung (niedrige Wärmeleitzahl).

Beispiele 12 bis 21

Löslichkeit der Schaumkomponenten

In diesen Beispielen wird die Auswirkung der unterschiedlichen, in den Beispielen 2 bis 11 verwendeten Schaumstabilisatoren auf die Löslichkeit der einzelnen Komponenten, besonders des Halogenkohlenstofftreibmittels, im Verschäumungsansatz demonstriert.

Sämtliche in der oben aufgeführten Rezeptur beschriebenen Komponenten, außer dem Treibmittel und der Isocyanatkomponente, werden in den angegebenen Gewichtsteilen vorgemischt. Nach Überführen dieser Mischung in eine Glasflasche werden 30 Gewichtsteile Trichlorfluormethan zugegeben, die Flasche sorgfältig verschlossen und der Inhalt intensiv durch Schütteln vermischt. Nach dem Aufsteigen der Gasblasen wird die Homogenität der Mischung visuell beurteilt; die Ergebnisse können der Tabelle 2 entnommen werden (Zuordnung der Schaumstabilisatoren: siehe Beispiel 1).

Tabelle 2

| Beispiel | Schaumstabilisator | Aussehen der Mischung |
|---|---|---|
| 12 | A | klar |
| 13 | B | fast klar |
| 14 | C | klar |
| 15 | D | klar |
| 16 | E | fast klar |
| 17 | F | klar |
| 18 | G | schwach trübe |
| 19 | H | klar |
| 20 | Vergleich 1 | stark trübe |
| 21 | Vergleich 2 | stark trübe |

## Patentansprüche

**1.** Verfahren zur Herstellung von Polyurethan- und/oder Polyisocyanurat-Hartschäumen aus mindestens difunktionellen Polyisocyanaten, Verbindungen mit mindestens zwei gegenüber Isocyanaten rkeaktionsfähigen Wasserstoffatomen, deren Äquivalentgewicht je reaktionsfähigem Wasserstoffatom etwa 50 bis 900 beträgt, Katalysatoren, Trieibmitteln und Schaumstabilisatoren, welche frei von Siliciumatomen sind, sowie gegebenenfalls üblichen Zusatzmitteln, wie Flammschutzmittel und Kettenverlängerer, dadurch gekennzeichnet, daß man als Schaumstabilisatoren Copolymerisate verwendet, welche durch Copolymerisation von

a) Vinylmonomeren der allgemeinen Formel

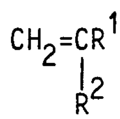

wobei

$R^1$ ein Wasserstoff- oder Methylrest,

$R^2$ der Rest

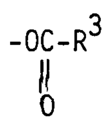, 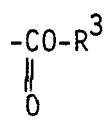 oder 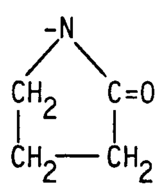

$R^3$ ein Alkylrest mit 1 bis 4 Kohlenstoffatomen ist,

und bei Vorliegen eines Gemisches verschiedener Vinylmonomere $R^1$, $R^2$ und $R^3$ unterschiedliche Bedeutung haben können,

und

b) Allyl- oder Methallylpolyoxyalkylenethern der allgemeinen Formel

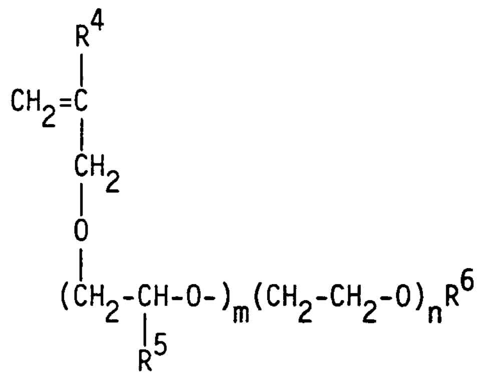

wobei

| | |
|---|---|
| $R^4$ | ein Wasserstoff- und/oder Methylrest, |
| $R^5$ | ein Methyl- und/oder Ethylrest, |
| $R^6$ | ein Wasserstoffrest oder eine gegenüber Isocyanatgruppen inerte Endgruppe, |
| m | eine Zahl von 1 bis 120, |
| n | eine Zahl von 1 bis 90 ist, und |
| m : n | einen Wert von 0,1 bis 7 hat, |

und welche ein durchschnittliches Molgewicht von 400 bis 5000 aufweisen,

im Molverhältnis a : b gleich 1 bis 10 in an sich bekannter Weise erhältlich sind.

**2.** Verfahren nach Anspruch 1, dadurch gekennzeichnet, daß man Copolymerisate verwendet, bei deren Herstellung das Molverhältnis der Monomeren a : b 3 bis 5 betrug.

**3.** Verfahren nach Anspruch 1 oder 2, dadurch gekennzeichnet, daß man Copolymerisate verwendet, zu deren Herstellung Allyl- oder Methallylpolyoxyalkylenether mit einem durchschnittlichen Molgewicht von 1400 bis 2400 verwendet wurden.

**4.** Verfahren nach einem oder mehreren der vorhergehenden Ansprüche, dadurch gekennzeichnet, daß man Copolymerisate verwendet, zu deren Herstellung Allyl- oder Methallylpolyoxyalkylenether mit einem Verhältnis m : n gleich 0,6 bis 2 verwendet wurden.

**5.** Verfahren nach einem oder mehreren der vorhergehenden Ansprüche, dadurch gekennzeichnet, daß man Copolymerisate verwendet, zu deren Herstellung Allyl- oder Methallylpolyoxyalkylenether mit blockartiger Verteilung der Polyoxyalkyleneinheiten, wobei der Polyoxyethylenblock endständig gebunden ist, verwendet wurden.

**6.** Verfahren nach einem oder mehreren der vorhergehenden Ansprüche, dadurch gekennzeichnet, daß man Copolymerisate verwendet, zu deren Herstellung Allyl- oder Methallylpolyoxyalkylenether, welche als Endgruppe $R^6$ eine Kohlenwasserstoffgruppe mit 1 bis 8 Kohlenstoffatomen, die Gruppe

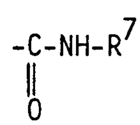 oder 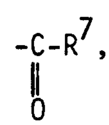,

wobei $R^7$ eine Kohlenwasserstoffgruppe mit 1 bis 8 Kohlenstoffatomen ist, tragen, verwendet wurden.

## Claims

**1.** Process for the production of rigid polyurethane and/or polyisocyanurate foams from at least difunctional polyisocyanates, compounds containing at least two hydrogen atoms which are reactive towards isocyanates and whose equivalent weight is from about 50 to 900 per reactive hydrogen atom, catalysts, blowing agents and foam stabilisers which are free from silicon atoms, and, if desired, conventional additives, such as flameproofing agents and chain extenders, characterised in that the

foam stabilisers used are copolymers obtainable by copolymerisation of

a) vinyl monomers of the general formula

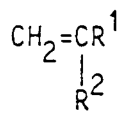

in which

$R^1$ is a hydrogen or methyl radical,

$R^2$ is the

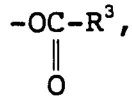, 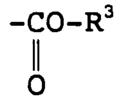 or 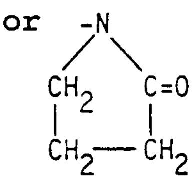

radical,

$R^3$ is an alkyl radical having 1 to 4 carbon atoms,

it being possible for $R^1$, $R^2$ and $R^3$ to have different meanings in the case of a mixture of different vinyl monomers,

and

b) allyl or methallyl polyoxyalkylene ethers of the general formula

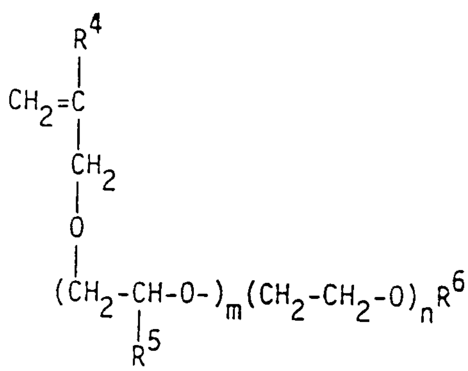

in which

$R^4$ is a hydrogen and/or methyl radical,

$R^5$ is a methyl and/or ethyl radical,

$R^6$ is a hydrogen radical or a terminal group which is inert towards isocyanate groups,

m is a number from 1 to 120,

n is a number from 1 to 90, and

m:n has a value of from 0.1 to 7,

and which have an average molecular weight of from 400 to 5,000,

in an a:b molar ratio of from 1 to 10 in a manner known per se.

**2.** Process according to Claim 1, characterised in that copolymers are used in whose preparation the molar ratio of monomers a:b was from 3 to 5.

**3.** Process according to Claim 1 or 2, characterised in that copolymers are used for whose preparation allyl or methallyl polyoxyalkylene ethers having an average molecular weight of from 1,400 to 2,400 were used.

4. Process according to one or more of the preceding claims, characterised in that copolymers are used for whose preparation allyl or methallyl polyoxyalkylene ethers having an m:n ratio of from 0.6 to 2 were used.

5. Process according to one or more of the preceding claims, characterised in that copolymers are used for whose preparation allyl or methallyl polyoxyalkylene ethers having a block-like distribution of the polyoxyalkylene units, with the polyoxyethylene block being bonded in a terminal position, were used.

6. Process according to one or more of the preceding claims, characterised in that copolymers are used for whose preparation allyl or methallyl polyoxyalkylene ethers carrying, as terminal group $R^6$, a hydrocarbon group having 1 to 8 carbon atoms or the

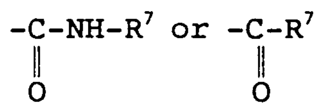

group in which $R^7$ is a hydrocarbon group having 1 to 8 carbon atoms, were used.

## Revendications

1. Procédé de préparation de mousses dures de polyuréthane et/ou de polyisocyanurate, composées de polyisocyanates au moins bifonctionnels, de composés comportant au moins deux atomes d'hydrogène capables de réagir avec des isocyanates, dont le poids d'équivalent par atome d'hydrogène capable de réagir est d'environ 50 à 900, de catalyseurs, d'agents moussants et de stabilisateurs de mousse qui sont exempts d'atomes de silicium, ainsi qu'éventuellement d'additifs usuels, comme des agents ignifuges et des agents d'allongement de chaîne, caractérisé en ce qu'on utilise, comme stabilisateurs de mousse, des copolymères qu'on peut obtenir, d'une manière connue en soi, par copolymérisation de :

a) monomères vinyliques répondant à la formule générale

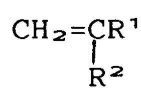

où

$R^1$ représente un atome d'hydrogène ou un reste méthyle,

$R^2$ représente le reste

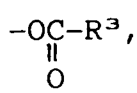, 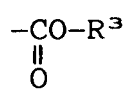 ou 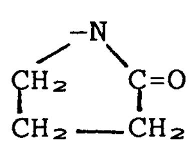

$R^3$ représente un reste alcoyle comportant 1 à 4 atomes de carbone, et dans le cas d'un mélange de différents monomères vinyliques, $R^1$, $R^2$ et $R^3$ peuvent avoir des significations différentes,

et

b) des éthers allyliques ou méthallyliques de poly(oxyalcoylène) répondant à la formule générale

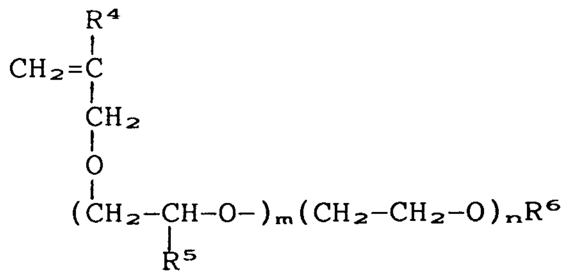

où

- $R^4$ représente un atome d'hydrogène ou un reste méthyle,
- $R^5$ représente un reste méthyle ou éthyle,
- $R^6$ représente un atome d'hydrogène ou un groupe terminal neutre vis-à-vis des groupes isocyanates,
- m est un nombre valant de 1 à 120,
- n est un nombre valant de 1 à 90, et
- m:n a une valeur de 0,1 à 7,

et qui ont un poids moléculaire moyen de 400 à 5.000,

selon un rapport molaire a : b de 1 à 10.

**2.** Procédé selon la revendication 1, caractérisé en ce qu'on utilise des copolymères dont la préparation s'effectue avec un rapport molaire des monomères a:b de 3 à 5.

**3.** Procédé selon la revendication 1 ou 2, caractérisé en ce qu'on utilise des copolymères qu'on prépare en utilisant des éthers allyliques ou méthallyliques de poly(oxyalcoylène) d'un poids molaire moyen de 1.400 à 2.400.

**4.** Procédé selon une ou plusieurs des revendications précédentes, caractérisé en ce qu'on utilise des copolymères qu'on prépare en utilisant des éthers allyliques ou méthallyliques de poly(oxyalcoylène) avec un rapport m : n de 0,6 à 2.

**5.** Procédé selon une ou plusieurs des revendications précédentes, caractérisé en ce qu'on utilise des copolymères qu'on prépare en utilisant des éthers allyliques ou méthallyliques de poly(oxyalcoylène) avec une répartition séquencée des motifs poly(oxyalcoylène), la séquence poly(oxyalcoylène) étant fixée en fin de chaîne.

**6.** Procédé selon une ou plusieurs des revendications précédentes, caractérisé en ce qu'on utilise des copolymères qu'on prépare en utilisant des éthers allyliques ou méthallyliques de poly(oxyalcoylène) qui comportent, comme groupe terminal $R^6$, un groupe hydrocarbure comportant 1 à 8 atome(s) de carbone, le groupe

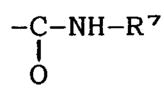 ou 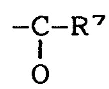 ,

où $R^7$ représente un groupe hydrocarbure comportant 1 à 8 atome(s) de carbone.